# EUROPÄISCHE PATENTSCHRIFT

(11) **EP 2 931 566 B1**
(45) Veröffentlichungstag und Bekanntmachung des Hinweises auf die Patenterteilung: **21.06.2017**
(21) Anmeldenummer: 13805846.6
(22) Anmeldetag: 11.12.2013
(51) Int. Cl.: B60R 25/104, B60Q 1/52

(54) **VERFAHREN ZUR KOMMUNIKATION EINES FAHRZEUGS AN SEINE UMGEBUNG**
METHOD FOR COMMUNICATION OF A VEHICLE WITH ITS SURROUNDINGS
PROCÉDÉ DE COMMUNICATION D'UN VÉHICULE AVEC SES ZONES ENVIRONNANTES

(30) Priorität: 17.12.2012 DE 102012223410
(43) Veröffentlichungstag der Anmeldung: 21.10.2015
(73) Patentinhaber: Bayerische Motoren Werke Aktiengesellschaft, 80809 München (DE)
(72) Erfinder: AUGST, Alexander, 80937 München (DE)
(86) Internationale Anmeldenummer: PCT/EP2013/076197
(87) Internationale Veröffentlichungsnummer: WO 2014/095512

(56) Entgegenhaltungen:
- EP-A1- 2 028 067
- WO-A1-94/20335
- WO-A1-2004/000613
- WO-A1-2008/138426
- DE-A1-102006 050 548
- FR-A1- 2 958 894
- GB-A- 2 214 688
- US-A- 1 646 886
- US-A- 2 803 810
- US-A- 6 124 783
- US-A1- 2004 041 983

## Beschreibung

Die Erfindung betrifft ein Verfahren zur Kommunikation eines Fahrzeugs an seine Umgebung und eine Vorrichtung zu demselben Zweck.
Moderne Fahrzeuge verfügen häufig über Alarmanlagen, die einen Diebstahl an eine zentrale Stelle über Mobilfunk melden können. Dabei kann auch eine über GPS bestimmte Position des Fahrzeugs übermittelt werden. Da dies bekannt ist, wird bei Diebstählen häufig die Alarmanlage und/oder das GPS System außer Kraft gesetzt. Auf diese Weise kann nicht mehr festgestellt werden, ob ein Fahrzeug gestohlen wurde, und wo sich dieses befindet. Auch von Außen ist einem Fahrzeug häufig nicht anzusehen, dass es von einer Notsituation betroffen ist, z.B. dass es gestohlen wurde. Passanten oder andere Verkehrsteilnehmer könnten deshalb, wenn sie wollten, nicht am Wiederfinden eines gestohlenen Fahrzeugs mitwirken. Darüber hinaus können sich mögliche Zeugen, z.B. Passanten oder andere Verkehrsteilnehmer, gerade im Falle von außergewöhnlichen Ereignissen an viele Informationen nicht erinnern. Insbesondere fällt es potentiellen Zeugen meistens schwer sich an Informationen quantitativer Art, wie z.B. Fahrzeugkennzeichen oder andere Daten des Fahrzeugs, zu erinnern, was die Aufklärung bzw. Problemlösung bei außergewöhnlichen Ereignissen sehr erschwert.
Aus der DE 10 2006 050 548 A1 ist ein Verfahren zur Warnung eines Verkehrsteilnehmers bekannt. In diesem wird mithilfe eines Projektionsmittels ein Warnhinweis an eine Stelle außerhalb des Kraftfahrzeugs projiziert.
Aufgabe an den Fachmann ist es, ein Verfahren bereitzustellen, dass die Hilfe von Passanten oder anderen Verkehrsteilnehmern in Bezug auf Fahrzeuge ermöglicht, bei denen außergewöhnliche Ereignisse eingetreten sind.
Die Aufgabe wird durch ein Verfahren nach Anspruch 1 und eine Vorrichtung nach Anspruch 13 gelöst. Vorteilhafte Ausführungsformen sind in den abhängigen Ansprüchen definiert.

In einem Aspekt umfasst ein Verfahren zur Kommunikation eines Fahrzeugs an seine Umgebung folgende Verfahrensschritte: Erkennen eines vorausbestimmten Ereignisses mit Mitteln des Fahrzeugs; Darstellen einer graphischen Botschaft mit Mitteln des Fahrzeugs, wobei die graphische Botschaft von außerhalb des Fahrzeugs sichtbar ist und zumindest eine quantitative Information zu dem vorausbestimmten Ereignis beinhaltet.
Die Botschaft ist somit von außerhalb des Fahrzeugs sichtbar beziehungsweise zumindest maschinell erkennbar. Die graphische Botschaft ermöglicht es z.B. Passanten, anderen Verkehrsteilnehmern, oder z.B. öffentlichen Diensten, Maßnahmen zu ergreifen und Handlungen vorzunehmen. Im Fall eines Diebstahls beispielsweise kann unabhängig und zusätzlich von der Alarmanlage so eine raffinierte Kommunikation des Fahrzeugs mit der Umgebung stattfinden. Diese Kommunikation kann derart ausgestaltet sein, dass sie für den Einbrecher beziehungsweise Dieb nach Möglichkeit nicht bemerkbar ist und trotzdem ein Maximum an Informationen, die für eine Problemlösung nützlich sein können, an einen, mehrere oder bestimmte Empfänger kommuniziert. Z.B. können diese Informationen zur Auffindbarkeit eines entführten Fahrzeugs genutzt werden. Ein von einem außergewöhnlichen Ereignis betroffenes, z.B. ein gestohlenes Fahrzeug kann somit ohne laute Geräusche wie Sirenen oder starke Lichteffekte automatisch eine wirksame Botschaft absetzen.
Ein weiterer Vorteil der Erfindung ist, dass eine fehlerhafte Aktivierung des Systems eine wesentlich geringere Belästigung für die Umgebung ist, als typische mit Geräuschen arbeitende Alarmanlagen. Der Energieverbrauch eines erfindungsgemäßen Systems kann vergleichsweise niedrig sein. Die graphischen Darstellungen können die Aufmerksamkeit von Passanten auf sich ziehen, was bei einem gestohlenen Fahrzeug von Vorteil für das Wiederfinden bzw. für eine sonstige Problemlösung bei außergewöhnlichen Ereignissen ist. Dadurch, dass die grafische Botschaft vorteilhafterweise nur von außen sichtbar bzw. lesbar ist, kann das Verfahren auch derart ausgeführt werden, dass der Fahrzeugführer davon nichts bemerkt. Die Passanten können durch die graphische Darstellung und einen gewissen Spieltrieb zum Handeln motiviert werden und beim Wiederauffinden des Fahrzeugs wertvolle Hilfe leisten.

Neben dem Fall eines Diebstahls sind andere Einsatzgebiete der Erfindung adressiert, beispielsweise bei Unfällen, Parkplatzremplern oder Notbremsungen oder Notausweichmanövern. In einer Weiterbildung wird der Code abhängig davon erzeugt, ob eine nicht autorisierte Nutzung oder ein Unfall des Fahrzeugs erkannt wurde.

In einer Weiterbildung ist das Verfahren derart ausgestaltet, dass die Information zumindest eine digitale Information, insbesondere mehr als zwei Zahlenwerte, insbesondere in einer kodierten Form, beinhaltet. Auf diese Weise kann nicht nur eine sichtbare oder maschinenlesbare Warnung dargestellt sein, sondern auch eine sehr konkrete Information zu der Warnung. Z.B. "Fahrzeug vor 30 Minuten gestohlen" oder "Anhänger dieses Fahrzeugs kann 70 cm ausscheren".

In einer besonders bevorzugten Weiterbildung umfasst die graphische Botschaft einen maschinenlesbaren, insbesondere einen zwei- oder dreidimensionalen, Code. Dieser kann beispielsweise als ein QR- oder MT- Code ("Qiuck Response" bzw. "Mobile Tagging") oder eine Weiterbildung solcher Verfahren ausgestaltet sein.

Ein solcher zweidimensionaler Code kann ein sogenannter "Mobile Tagging Code" sein, der z.B. in mehreren Varianten für diverse mögliche Ereignisse vorprogrammiert sein kann oder auch jeweils neu erzeugt werden kann. Ein solcher Code kann durch Smartphones über eine Kameraaufnahme oder mit anderen Lesevorrichtungen unproblematisch ausgelesen werden kann. Gerade bei einem vorbeifahrenden Fahrzeug kann über eine Fotografie so schnell die graphische Darstellung erfasst werden. Dies bietet einen bedeutenden Vorteil in der Geschwindigkeit und Verlässlichkeit der Informationserfassung im Vergleich zu einem Merken und ggf. einem späteren Notieren von Informationen durch einen Passanten. Zusätzlich zu solchen Codeverfahren kann die grafische Botschaft auch weitere Information übertragen, die mittels gepulsten Lichts zusätzlich kodiert wird. So können bestimmte Teile der grafischen Botschaft mittels eines zeitlich modulierten Lichts bzw. mit einer zeitlich veränderlichen Helligkeit dargestellt sein.

Insbesondere ist es auch vorteilhaft, die Botschaft derart darzustellen, dass diese von den Infrastrukturvorrichtungen, z.B. Überwachungskameras an Brücken, Beleuchtungsmasten, oder Ähnlichem entlang der Route ausgelesen werden kann.

Die graphische Botschaft kann im sichtbaren Lichtspektrum dargestellt werden. Es ist aber auch vorteilhaft die Botschaft zumindest teilweise in einem nicht sichtbaren Spektrum, beispielsweise im Infrarotbereich darzustellen. Besonders bevorzugt ist eine grafische Botschaft, die einen ohne Hilfsmittel sichtbaren Teil beinhaltet, der insbesondere symbolische und/oder textuelle, unkodierte Information und/oder einen abgrenzenden Rahmen beinhaltet, und einen nicht ohne technische Mittel sichtbaren Teil beinhaltet, der eine, insbesondere kodierte Information beinhaltet.

In einer Weiterbildung wird der Codes abhängig von dem vorbestimmten Ereignis und/oder von den Parametern des vorausbestimmten Ereignisses mit Mitteln des Fahrzeugs erzeugt. Ein Merkmal des Verfahrens kann sein, dass die quantitative Information variabel ist und stets aktualisiert kommuniziert werden kann. Diese kann z.B. auch während eines vorausbestimmten Ereignisses variabel dargestellt werden und z.B. jeweils die aktuellen Informationen beinhalten.

Parameter könnten hier sein: Auffahrgeschwindigkeit bei einem Bagatellschaden, oder ein mit der Kamera des Fahrzeugs automatisch erkanntes Kennzeichen des Schädigers bei einem Unfall oder Bagatellschaden. Bei gestohlenem Fahrzeug kann der Parameter sein, ob das Fahrzeug aufgebrochen oder z.B. lediglich mit einem zweifelhaften oder als gestohlen gemeldetem Schlüssel geöffnet wurde.

In einer anderen Weiterbildung kann die Information, insbesondere der maschinenlesbare Code in einer für zumindest einen Verkehrsteilnehmer sichtbare Lichtprojektion und/oder grafische Botschaft und/oder Designelement, insbesondere ein Lichtdesignelement, umfasst sein.

Die Information kann z.B. in eine in DE 10 2006 050 548 beschriebene Projektion derart integriert sein, dass zusätzlich zu der Wirkung der sichtbaren Grafik auch eine detaillierte und präzise speicherbare digitale Information ausgelesen werden kann. Somit können sich erhebliche Vorteile durch Zusammenlegung oder Synergien, z.B. bei der Gestaltung der Optik, ergeben.
Des Weiteren kann die Information z.B. mittels einer Sensorikvorrichtung kommuniziert werden bzw. zusammen mit einem Verfahren zur Sensierung (Erfassung) der Fahrzeugumgebung mittels Licht ausgeführt werden. Ein solches Verfahren ist in der WO 2008/138426 des Anmelders offenbart.

Die Einbettung der quantitativen Information in eine mit oder ohne technische Mittel erkennbare Grafik kann auch derart erfolgen, dass ein Teil der Grafik oder Projektion andere spektrale Anteile und/oder räumliche Unterbrechungen (ein räumliches Muster) und/oder zeitliche Unterbrechungen und/oder Ortsfrequenzen beinhaltet, die in Abhängigkeit von der Information über das vorausbestimmte Ereignis erzeugt werden. Somit kann die grafische Botschaft sowohl unmittelbar gesehen werden und eine gewisse Information auch unmittelbar tragen, als auch z.B. mittels eines Mobiltelefons gelesen werden. Der quantitative, insbesondere digitale Inhalt der Botschaft, kann so beim Empfänger unkompliziert voll oder teilautomatisch gespeichert werden. Somit wird das oben beschriebene Problem des korrekten Merkens von insbesondere quantitativen Informationen deutlich entschärft. In einer Weiterbildung des Verfahrens kann der QR-Code sogar eine zumindest teilweise automatisierte Verbindung mit einem Hilfsdienst oder einer Kontaktperson, z.B. einen vorgewählten Anruf, eine vorverfasste SMS bzw. MMS, bewirken.
Somit kann auch eine passende Telefonnummer zu einem passenden Hilfsdienst (welche, z.B. einem zufälligen Passanten in einer kritischen Situation nicht notwendigerweise sofort einfallen), z.B. Polizei, Feuerwehr, ein medizinischer Dienst oder ein technischer Dienst automatisch bereitgestellt werden. Dies beschleunigt und erleichtert die Problemlösung bzw. Hilfeleistung bei dem außergewöhnlichen Ereignis. Auch löst dies mögliche Zweifel oder Hemmschwellen z.B. bei einem Zeugen, die in modernen Gesellschaften sehr häufig einem Handeln mit Zivilcourage im Wege stehen.

In einer Weiterbildung des Verfahrens wird ein möglicher Zeuge aufgefordert das Fahrzeug von außen, z.B. mit seinem Mobiltelefon zu fotografieren und/oder das Bild an eine, z.B. automatisch vorgewählte Nummer, z.B. als eine MMS, zu versenden.

Der Begriff "vorausbestimmtes Ereignis" ist im Rahmen dieser Anmeldung insbesondere so zu verstehen, dass er außergewöhnliche Ereignisse beinhaltet. Vorausbestimmte Ereignisse können insbesondere solche Ereignisse sein, die eine materielle oder körperliche Bedrohung für einen der Fahrzeuginsassen oder für mindestens einen Verkehrsteilnehmer bedeuten. Insbesondere sind vorausbestimmte Ereignisse dadurch gekennzeichnet, dass diese die Interessen von mindestens zwei oder mehreren Parteien und/oder eine besondere rechtliche Bedeutung für zumindest zwei Parteien oder für die Öffentlichkeit haben, bzw. auch eine strafrechtliche bedeutsame Komponente haben.
Die Anwendung des Verfahrens auf außergewöhnliche Ereignisse ist sehr vorteilhaft, weil im Falle von außergewöhnliche Ereignissen, bei weichen z.T. Personenschaden oder erhebliche materielle Schäden entstehen, denkbare Beschränkungen oder Vorschriften bezüglich Beleuchtungsvorrichtungen eines Fahrzeugs ggf. ausnahmsweise übertreten werden können. Das Verfahren muss daher nicht notwendigerweise zu einer signifikanten zu Erhöhung des von Fahrzeugen emittierten Lichts bzw. etwaiger Irritationen führen. Gemäß der Erfindung bezieht sich die quantitative Information auf eine Beschreibung des vorausbestimmten Ereignisses oder die Zeit und/oder den Ort des vorausbestimmten Ereignisses. Der Ort kann als Koordinaten, Adresse oder eine Beschreibung, die sich auf den Standort der Anzeige bezieht, ausgestaltet werden. Eine derartige Beschreibung kann sein: "das Fahrzeug wurde an einer Kreuzung vor drei Querstraßen oder Ampeln in dieser Straße durch ein anderes Fahrzeug mit dem Kennzeichen XXX beschädigt".
In einer bevorzugten Weiterbildung umfasst das Verfahren ferner: Abrufen von einem oder mehreren der folgenden Informationen: -die Identität des Fahrzeugs, die Position des Fahrzeugs (beispielsweise in Form von aktuellen GPS Koordinaten), Kontaktinformationen von Personen, eine Handlungsanweisung (Bspw. "Bitte an Polizei weitermailen"), der aktuelle Zeitstempel, der insbesondere technische Zustand des Fahrzeugs; -Falls ein Unfall als Ereignis festgestellt wurde insbesondere auch: die Kontaktinformation einer Kontaktperson von einem verunfallten Insassen, die medizinische Information wie z.B. eine Blutgruppe; Erzeugen der graphischen Botschaft abhängig von den abgerufenen Informationen. Es kann auch die Berücksichtigung allein technisch fahrzeugspezifischer Umstände vorgesehen sein (bspw. "Treibstoff / Motoröl läuft aus"). Der Code wird also variabel erzeugt, je nach aufgetretenem Ereignis.
Ein weiterer Vorteil gegenüber einer aus dem Stand der Technik bekannten Alarmauslösung besteht auch darin, dass das erfindungsgemäße Verfahren bereits bei Anzeichen eines außergewöhnlichen Ereignisses (z.B. eine Fahrzeugentführung) eine Überprüfung startet, aber erst nach einer Bestätigung (ggf durch einen Passanten) Maßnahmen ergriffen werden. Ein Verkehrsteilnehmer, z.B. ein Passant, hat so noch die Möglichkeit seinerseits das Vorhandensein eines solchen Ereignisses zu überprüfen.
Erfindungsgemäß kann auch ein Folge von graphischen Botschaften dargestellt werden, die jeweils aktualisierte Informationen umfassen oder sich ergänzende Informationen. Bei sich ergänzenden Botschaften kann so insgesamt eine größere Datenmenge übertragen werden, als mit einem z.B. aufgedruckten Code. Es kann vorgesehen sein, die Botschaft zu unterschiedlichen Zeiten anders zu kodieren, so dass eine umfangreichere Information auf mehrere aufeinanderfolgende Darstellungen der grafischen Botschaft bzw. Codedarstellungen aufgeteilt wird. Beispielsweise wird die Botschaft in regelmäßigen Zeitabständen neu generiert, ggf. mit einem anderen Codierverfahren oder einem anderen Codierschlüssel kodiert.

Vorteilhafterweise kann der Code auch eine Verschlüsselung enthalten, so dass dieser nur von einer begrenzten Gruppe von autorisierten Nutzern, insbesondere im vollen Umfang, entschlüsselt werden kann. z.B. kann eine solche Gruppe von Nutzern Ärzte oder Polizisten sein, deren Mobiltelefone z.B. über einen entsprechenden Leseschlüssel verfügen. Somit können bestimmte Informationen ausschließlich von bestimmten Nutzern genutzt werden.

In einer anderen Weiterbildung umfasst das Darstellen der graphischen Botschaft folgendes: Projizieren der graphischen Botschaft mit Mitteln des Fahrzeugs auf einer Oberfläche außerhalb des Fahrzeugs. Auf diese Weise wird die Botschaft für einen Betrachter an einer Stelle sichtbar, die nicht auf dem Fahrzeug liegt. Dies kann beispielsweise dann von besonderer Bedeutung sein, wenn das Fahrzeug verdeckt oder nicht direkt sichtbar ist. Die graphische Botschaft kann beispielsweise vom Außenspiegel auf den Gehweg projiziert werden. Das Darstellen der graphischen Botschaft kann auch folgendes umfassen: Projizieren der graphischen Botschaft aus dem Inneren des Fahrzeugs auf eine zumindest teilweise transparente Fläche des Fahrzeugs, insbesondere auf eine Heckscheibe und/oder eine Oberfläche einer Fahrzeugleuchte. Der Projektor kann somit im Innern des Fahrzeugs verbaut sein und auf eine Außenfläche des Fahrzeugs projizieren, wobei diese Projektion dann von außen sichtbar ist.

Vorteilhafterweise ist das Verfahren derart ausgestaltet, dass die Position der Projektion sich relativ zur Position des Fahrzeugs abhängig von den Bewegungsparametern des Fahrzeugs verändert. Somit kann die Position, an welche die Projektion zu jedem Zeitpunkt projiziert wird, optimiert werden.

Insbesondere kann die Position der Projektion insbesondere kontinuierlich oder in Schritten derart angepasst werden, dass diese relativ zu Erdkoordinaten eine geringere Geschwindigkeit und/oder Beschleunigung als das Fahrzeug aufweist. Somit ergibt sich der Vorteil, dass auch eine Projektion von einem relativ schnell fahrenden Fahrzeug einfacher, insbesondere mit technischen Mitteln, gesehen und auch gelesen werden kann.

Die Darstellung der grafischen Botschaft kann mittels eines Displays, eines 3D-Displays oder einer Matrix von Leuchtmittel, z.B. LEDs oder OLEDs erfolgen. Eine entsprechende Darstellungsvorrichtung kann z.B. zusammen mit den Leuchten des Fahrzeugs verbaut sein. Besonders vorteilhaft ist eine Darstellungsvorrichtung, die nicht unmittelbar sichtbar, z.B. hinter einer teiltransparenten oder nur für bestimmte spektrale Anteile transparenten Oberfläche verbaut ist. Die Darstellungsvorrichtung kann z.B. in Zierteile des Fahrzeugs, z.B. in eine Türzierleiste integriert sein. Vorteilhafterweise wird der zumindest maschinenlesbare Teil der grafischen Botschaft derart dargestellt, dass dieser auslesbar ist, wenn eine Kamera auf die Oberfläche, auf welche die grafische Botschaft projiziert wird, fokussiert ist.

Die graphische Botschaft kann auch vom Innern des Fahrzeugs auf eine matte Kunststoffoberfläche, zum Beispiel eine weitergebildete Leuchte, ein Tür- oder Fensterteil, die zumindest zum Teil transparent gestaltet sind, projiziert werden. Hier ist ebenfalls eine kostengünstige Realisierung möglich. Neben einem Projektor beziehungsweise sogenannten Beamer kann eine Masken- oder eine Laserprojektion eingesetzt werden.

In einer Variante des Verfahrens ist das Ereignis eine unberechtigte Nutzung des Fahrzeugs oder der Zeitpunkt eines Unfalls, und das Verfahren umfasst ferner: Erkennen des Beginns der unberechtigten Nutzung des Fahrzeugs oder des Zeitpunkt des Unfalls; Feststellen des Ablaufes einer vorgegebenen Zeit oder einer vorgegebenen Fahrtstrecke nach dem Beginn der unberechtigten Nutzung oder dem Zeitpunkt des Unfalls; Wobei das Darstellen der graphischen Botschaft in Antwort auf das Feststellen des Ablaufes erfolgt. Gerade im Fall eines Diebstahls kann auf diese Weise das Fahrzeug für den Dieb unerwartet und unbemerkt eine Botschaft anzeigen, was helfen kann das Fahrzeug wiederzufinden.

In einer weiterbildenden Implementierung umfasst das Verfahren ferner: Feststellen, dass eine vorbestimmte Fahrtbedingung eingetreten ist, insbesondere, dass sich das Fahrzeug mit weniger als einer vorgegebenen Geschwindigkeit, insbesondere weniger als 20 km/h, fortbewegt und/oder dem Befinden innerhalb einer vorgegebenen Art von Fahrbahnabschnitten, insbesondere einer Kreuzung oder Ampel; Wobei das Darstellen der graphischen Botschaft in Antwort auf das Feststellen, dass eine vorbestimmte Fahrtbedingung eingetreten ist, erfolgt. Auf diese Weise können Passanten, beispielsweise Fußgänger an einem Zebrastreifen oder einer Ampel die Darstellung sehen und mit dem Smartphone einlesen bzw. fotografieren, ohne dass beispielsweise ein Dieb davon Kenntnis erlangt. In diesem Zusammenhang ist es auch sinnvoll, die Darstellung vor dem Fahrzeug zu projizieren.

In einem anderen Aspekt umfasst eine Vorrichtung zur Kommunikation eines Fahrzeugs an seine Umgebung: Eine oder mehrere Vorrichtungen zur Erkennung eines vorausbestimmten Ereignisses; Eine Recheneinheit zur Bestimmung einer grafischen Botschaft die eine, insbesondere quantitative, Information über das vorausbestimmte Ereignis beinhaltet; eine Darstellungsvorrichtung (beispielsweise ein Projektor), die dazu eingerichtet ist, eine grafische Botschaft in die Umgebung des Fahrzeugs darzustellen. Mithilfe dieser Vorrichtung kann somit eines der oben dargestellten Verfahren ausgeführt werden. Eine Recheneinheit kann ein Computer oder dedizierte Schaltkreise sein. Generell kann die Vorrichtung über weitere Schnittstellen verfügen, um relevante Informationen zu erlangen.

Des Weiteren umfasst die Erfindung auch eine Recheneinheit zur Ausführung des erfindungsgemäßen Verfahrens sowie das Fahrzeug, in dem das entsprechende Verfahren ausgeführt wird. Es kann somit also ein Computerprogrammprodukt mit einem Datenträger mit Programmcode und/oder einem ausführbaren Programm bereitgestellt werden, der bzw. das dazu ausgebildet ist, das beschriebene Verfahren durchzuführen, wenn der Programmcode bzw. das ausführbare Programm auf einer entsprechend ausgebildeten Recheneinheit ausgeführt wird. Zum Umfang der Erfindung gehört ein Produkt das nachtäglich ins Fahrzeug eingebaut wird oder am Fahrzeug befestigt wird und insbesondere die Fahrzeuginfrastruktur (Stromversorgung, Daten, Signale) nutzt.

Bei einer vorteilhaften Ausgestaltung des Verfahrens wird die Anzeigevorrichtung auf der Bekleidung eines Motorradfahrers befestigt oder ist als ein Teil dieser Bekleidung ausgestaltet.

### KURZE BESCHREIBUNG DER ZEICHNUNGEN

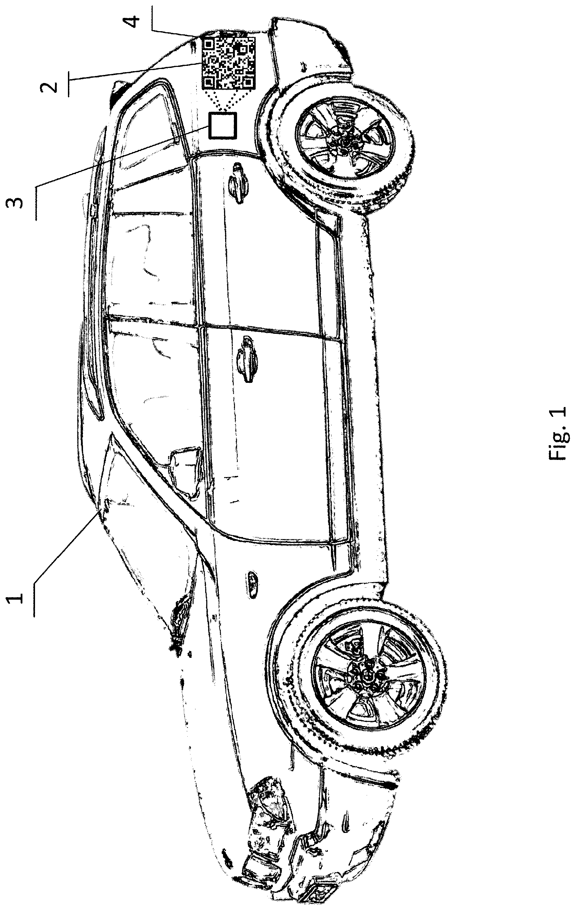

Fig. 1 bis 3 zeigen schematisch eine graphische Darstellung eines zweidimensionalen Codes durch ein Fahrzeug gemäß Ausführungsbeispielen.

### DETAILLIERTE BESCHREIBUNG DER AUSFÜHRUNGSBEISPIELE

Fig. 1 zeigt eine graphische Darstellung eines zweidimensionalen Codes gemäß einem Ausführungsbeispiel. Mithilfe von einer Fahrzeugsensorik und einer Fahrzeugrecheneinheit, z,B. mittels einer Diebstahlerkennungsanlage erkennt ein Fahrzeug 1, dass ein Diebstahl des Fahrzeugs 1 stattgefunden hat. Bei einem Ampelstop an einer Kreuzung wird durch das Fahrzeug ein Projektor 3 aktiviert. Dieser projiziert auf eine ausreichend durchscheinende Seitenfläche 4 des Fahrzeugs 1 den QR Code 2, welcher vorher von einer Recheneinheit (nicht dargestellt) erzeugt wurde. Zur Erzeugung des Codes berücksichtigt die Recheneinheit, dass das Fahrzeug gestohlen wurde, was der Recheneinheit von der Diebstahlerkennungsanlage über eine geeignete Schnittstelle mitgeteilt wurde. Der QR Code 2 enthält als Information die Botschaft: "Gestohlenes Fahrzeug, M-X XXXX".

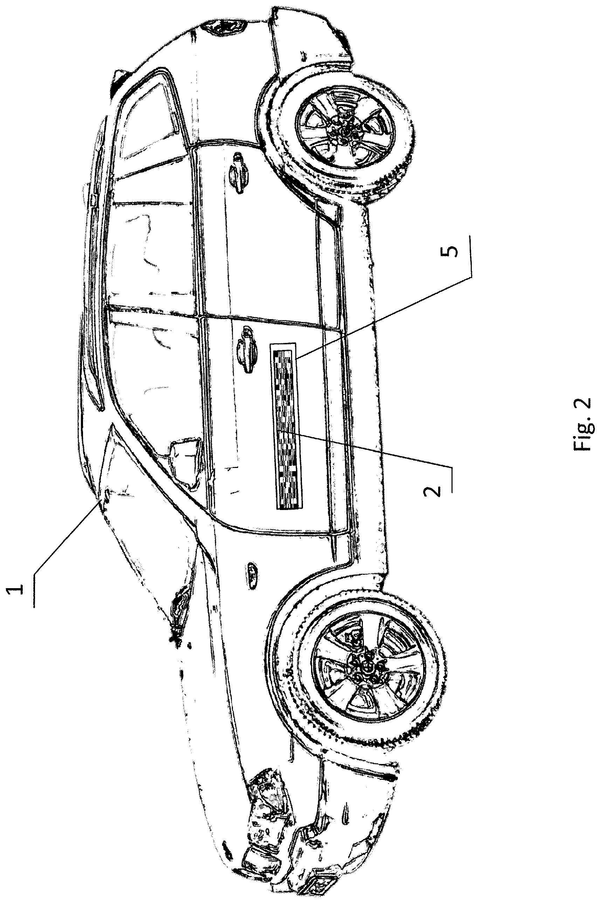

Fig. 2 zeigt eine Darstellung eines zweidimensionalen Codes 2 gemäß einem anderen Ausführungsbeispiel. Ein außergewöhnliches Ereignis wird mit Mitteln des Fahrzeugs 1 als solches erkannt. Die quantitativen Informationen zum Ereignis, insbesondere eine quantitative Beschreibung einer Gefahr und die Handlungsanweisungen zu dem Ereignis, werden in Form eines maschinenlesbaren Codes 2 mit einer Darstellungsvorrichtung 5 dargestellt. Dabei ist die Darstellungsvorrichtung 5 in eine Fahrzeugtür bzw. in die Türzierleiste eingebaut. In diesem Beispiel ist die Darstellungsvorrichtung 5 eine Anzeigevorrichtung und als ein Array aus LED ausgestaltet. Der Code 2 wird beweglich dargestellt, derart, dass die Bewegung des Codes 2 die Fahrzeugbewegung zumindest teilweise ausgleicht. Somit kann der Code 2 leichter z.B. von den Passanten mittels Mobiltelefon eingescannt werden. Der Code 2 kann von Passanten, z.B. mittels Mobiltelefonen, oder von Infrastrukturvorrichtungen, z.B. Waschstraßen, ausgelesen, gespeichert oder weitergeleitet werden.

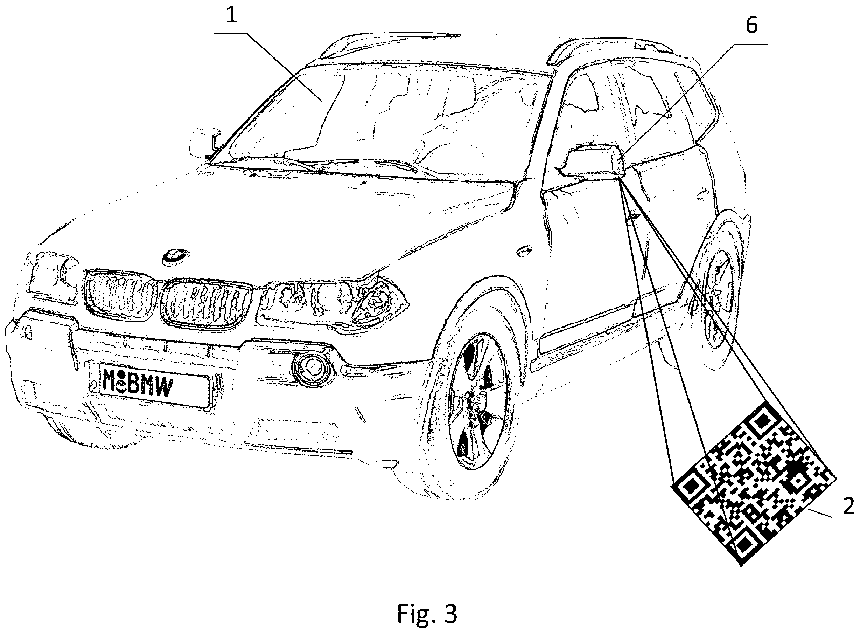

Fig. 3 zeigt eine Darstellung eines zweidimensionalen Codes 2 gemäß einem weiteren Ausführungsbeispiel. Ein außergewöhnliches Ereignis wird mit Mitteln des Fahrzeugs 1 als solches erkannt und die Art des außergewöhnlichen Ereignisses automatisch festgestellt. Die quantitativen Informationen zum Ereignis, insbesondere eine quantitative Beschreibung einer Gefahr und die Handlungsanweisungen zu dem Ereignis, werden in Form eines maschinenlesbaren Codes 2 mit Mitteln 6 des Fahrzeugs 1 erzeugt und auf eine Stelle außerhalb des Fahrzeugs 1 projiziert, hier die Straße. Der Code 2 verändert sich einmal pro Sekunde, so dass insgesamt eine umfangreiche Information in kurzer Zeit kommuniziert werden kann. Diese kann z.B. von Passanten z.B. mittels Mobiltelefonen ausgelesen, gespeichert oder weitergeleitet werden.

## Patentansprüche

1. Verfahren zur Kommunikation eines Fahrzeugs (1) an seine Umgebung, mit folgenden Verfahrensschritten:
Erkennen eines vorausbestimmten Ereignisses mit Mitteln des Fahrzeugs, wobei das Ereignis eine unberechtigte Nutzung des Fahrzeugs oder der Zeitpunkt eines Unfalls ist;
Erkennen des Beginns der unberechtigten Nutzung des Fahrzeugs oder des Zeitpunkt des Unfalls;
Feststellen des Ablaufes einer vorgegebenen Zeit oder einer vorgegebenen Fahrtstrecke nach dem Beginn der unberechtigten Nutzung oder dem Zeitpunkt des Unfalls;
in Antwort auf das Feststellen des Ablaufes: Darstellen einer graphischen Botschaft (2) mit Mitteln (3) des Fahrzeugs, wobei die graphische Botschaft (2) von außerhalb des Fahrzeugs (1) sichtbar ist und zumindest eine quantitative Information zu dem vorausbestimmten Ereignis beinhaltet;
wobei sich die quantitative Information auf die Zeit und/oder den Ort des vorausbestimmten Ereignisses bezieht.

2. Verfahren nach dem Anspruch 1, derart ausgestaltet, dass die Information zumindest eine digitale Information, insbesondere mehr als zwei Zahlenwerte beinhaltet.

3. Verfahren nach Anspruch 1, wobei die graphische Botschaft einen maschinenlesbaren, insbesondere einen zwei- oder dreidimensionalen, Code (2) umfasst.

4. Verfahren nach Anspruch 3, ferner umfassend:
Erzeugen des Codes (2) abhängig von dem vorbestimmten Ereignis und/oder von den Parametern des vorausbestimmten Ereignisses mit Mitteln des Fahrzeugs (1).

5. Verfahren nach einem der vorhergehenden Ansprüche, derart ausgestaltet, dass die Information, insbesondere der maschinenlesbare Code (2) in einer für zumindest einen Verkehrsteilnehmer sichtbare Lichtprojektion und/oder grafische Botschaft und/oder Designelement, insbesondere ein Lichtdesignelement, umfasst ist.

6. Verfahren nach einem der vorhergehenden Ansprüchen, bei dem das vorausbestimmte Ereignis ein mit Mitteln des Fahrzeugs (1) erkanntes Ereignis von außerhalb des Fahrzeugs (1) beinhaltet, das andere Verkehrsteilnehmer oder Personen außerhalb des Fahrzeugs (1) betrifft.

7. Verfahren nach einem der vorhergehenden Ansprüche, bei dem sich die quantitative Information auf eine Beschreibung des vorausbestimmten Ereignisses bezieht.

8. Verfahren nach einem der vorhergehenden Ansprüche, ferner umfassend:
Abrufen von einem oder mehreren der folgenden Informationen:
- die Identität des Fahrzeugs (1), die Position des Fahrzeugs (1), Kontaktinformationen von Personen, eine Handlungsanweisung, der aktuelle Zeitstempel, der insbesondere technische Zustand des Fahrzeugs;
- Falls ein Unfall als Ereignis festgestellt wurde insbesondere auch: die Kontaktinformation einer Kontaktperson von einem verunfallten Insassen, die medizinische Information wie eine Blutgruppe;
Erzeugen der graphischen Botschaft abhängig von den abgerufenen Informationen.

9. Verfahren nach einem der vorhergehenden Ansprüche, wobei das Darstellen der graphischen Botschaft (2) folgendes umfasst:
Projizieren der graphischen Botschaft mit Mitteln des Fahrzeugs (1) auf eine Oberfläche außerhalb des Fahrzeugs.

10. Verfahren nach Anspruch 8, wobei die Position der Projektion relativ zur Position des Fahrzeugs (1) sich abhängig von den Bewegungsparametern des Fahrzeugs (1) verändert, insbesondere derart, dass die Position der Projektion relativ zu Erdkoordinaten eine geringere Geschwindigkeit und/oder Beschleunigung als das Fahrzeug (1) aufweist.

11. Verfahren nach einem der vorhergehenden Ansprüche, wobei das Darstellen der graphischen Botschaft (2) folgendes umfasst:
Projizieren der graphischen Botschaft (2) aus dem Inneren des Fahrzeugs (1) auf eine zumindest teilweise transparente Fläche des Fahrzeugs (1), insbesondere auf eine Heckscheibe und/oder eine Oberfläche einer Fahrzeugleuchte.

12. Verfahren nach einem der vorhergehenden Ansprüche, ferner umfassend:
Feststellen, dass eine vorbestimmte Fahrtbedingung eingetreten ist, insbesondere, dass sich das Fahrzeug (1) mit weniger als einer vorgegebenen Geschwindigkeit, insbesondere weniger als 20 km/h, fortbewegt und/oder dem Befinden innerhalb einer vorgegebenen Art von Fahrbahnabschnitten, insbesondere einer Kreuzung oder Ampel;
Wobei das Darstellen der graphischen Botschaft in Antwort auf das Feststellen, dass eine vorbestimmte Fahrtbedingung eingetreten ist, erfolgt.

13. Vorrichtung zur Kommunikation eines Fahrzeugs (1) an seine Umgebung umfassend:
Eine oder mehrere Vorrichtungen zur Erkennung eines vorausbestimmten Ereignisses, wobei das Ereignis eine unberechtigte Nutzung des Fahrzeugs oder der Zeitpunkt eines Unfalls ist;
Eine Recheneinheit zur Bestimmung einer grafischen Botschaft (2), die eine quantitative Information über das vorausbestimmte Ereignis beinhaltet;
Eine Darstellungsvorrichtung (3), die dazu eingerichtet ist, eine grafische Botschaft (2) in die Umgebung des Fahrzeugs (1) darzustellen;
wobei sich die quantitative Information auf die Zeit und/oder den Ort des vorausbestimmten Ereignisses bezieht.

14. Vorrichtung nach Anspruch 13, wobei die Vorrichtung dazu eingerichtet ist, ein Verfahren nach einem der Ansprüche 1 bis 12 auszuführen.

15. Recheneinheit, die zur Ausführung eines der Verfahren nach den Ansprüchen 1 bis 12 eingerichtet ist.

16. Computerprogrammprodukt mit einem Datenträger mit Programmcode und/oder einem ausführbaren Programm, der bzw. das dazu ausgebildet ist, das Ausführen eines der Verfahren nach den Ansprüchen 1 bis 12 durch eine elektronische Recheneinheit zu veranlassen, wenn der Programmcode bzw. das ausführbare Programm von der Recheneinheit ausgeführt wird.

## Claims

1. A method for communication of a vehicle (1) with its surroundings, said method comprising the following method steps:
detecting a predetermined event using means of the vehicle, wherein the event is an unauthorised use of the vehicle or the point in time of an accident;
detecting the start of the unauthorised use of the vehicle or of the point in time of the accident;
ascertaining the course of a predefined time or a predefined route following on from the start of the unauthorised use or the point in time of the accident;
in response to the ascertainment of the course: displaying a graphic message (2) using means (3) of the vehicle, wherein the graphic message (2) is visible from outside the vehicle (1) and includes at least one quantitative piece of information relating to the predetermined event;
wherein the quantitative information relates to the time and/or the location of the predetermined event.

2. A method according to claim 1, designed in such a way that the information includes at least one piece of digital information, more especially more than two numerical values.

3. A method according to claim 1, wherein the graphic message comprises a machine-readable, more especially a two- or three-dimensional, code (2).

4. A method according to claim 3, further comprising the following step:
generating the code (2) depending on the predetermined event and/or the parameters of the predetermined event using means of the vehicle (1).

5. A method according to any one of the preceding claims, designed in such a way that the information, more especially the machine-readable code (2), is comprised in a light projection and/or graphic message and/or design element, more especially a light design element, visible to at least one road user.

6. A method according to any one of the preceding claims, in which the predetermined event includes an event that is detected using means of the vehicle (1) from outside the vehicle (1) and that concerns other road users or individuals outside the vehicle (1).

7. A method according to any one of the preceding claims, in which the quantitative information relates to a description of the predetermined event.

8. A method according to any one of the preceding claims, further comprising the following step:
retrieving one or more of the following pieces of information:
- the identity of the vehicle (1), the position of the vehicle (1), contact information of individuals, an instruction, the current timestamp, the state of the vehicle, more especially the technical state of the vehicle;
- if an accident was ascertained as the event, more especially also: the contact information of a contact person of a passenger involved in the accident, the medical information such as a blood group;
producing the graphic message depending on the retrieved information.

9. A method according to any one of the preceding claims, wherein the display of the graphic message (2) comprises the following:
projecting the graphic message using means of the vehicle (1) onto a surface outside the vehicle.

10. A method according to claim 8, wherein the position of the projection relative to the position of the vehicle (1) changes depending on the movement parameters of the vehicle (1), more especially in such a way that the position of the projection relative to ground coordinates has a slower speed and/or acceleration than the vehicle (1).

11. A method according to any one of the preceding claims, wherein the display of the graphic message (2) comprises the following:
projecting the graphic message (2) from the interior of the vehicle (1) onto an at least partially transparent surface of the vehicle (1), more especially onto a rear windscreen and/or a surface of a vehicle lamp.

12. A method according to any one of the preceding claims, further comprising the following step:
ascertaining that a predetermined driving condition has occurred, more especially that the vehicle (1) is travelling at less than a predefined speed, more especially less than 20 km/h, and/or the location within a predefined type of road portion, more especially at a crossroads or traffic lights;
wherein the graphic message is displayed in response to the ascertainment that a predetermined driving condition has occurred.

13. A device for communication of a vehicle (1) with its surroundings, comprising:
one or more devices for detecting a predetermined event, wherein the event is an unauthorised use of the vehicle or the point in time of an accident;
a computing unit for determining a graphic message (2) which includes a quantitative piece of information regarding the predetermined event;
a display device (3), which is designed to display a graphic message (2) into the surroundings of the vehicle (1);
wherein the quantitative information relates to the time and/or the location of the predetermined event.

14. A device according to claim 13, wherein the device is designed to carry out a method according to any one of claims 1 to 12.

15. A computing unit, which is designed to carry out one of the methods according to claims 1 to 12.

16. A computer program product comprising a data carrier with program code and/or comprising an executable program, which are/is designed to prompt the carrying out of one of the methods according to claims 1 to 12 by an electronic computing unit if the program code and/or the executable program are/is run by the computing unit.

## Revendications

1. Procédé permettant à un véhicule (1) de communiquer avec son environnement comprenant les étapes suivantes consistant à :
- identifier un évènement prédéterminé avec des moyens du véhicule, cet évènement étant une utilisation non autorisée du véhicule ou l'instant d'un accident,
- identifier le début de l'utilisation non autorisée du véhicule ou, l'instant de l'accident,
- déterminer l'écoulement d'une durée prédéfinie ou d'un trajet prédéfini après le début de l'utilisation non autorisée ou de l'instant de l'accident,
- en réponse à la détermination de l'écoulement de la durée, représenter un message graphique (2) avec des moyens (3) du véhicule, ce message graphique (2) étant visible de l'extérieur du véhicule (1) et renfermant au moins une information quantitative concernant l'événement prédéterminé,
- l'information quantitative concernant l'instant et/ou le lieu de l'événement prédéterminé.

2. Procédé conforme à la revendication 1,
mis en oeuvre pour que l'information renferme au moins une information numérique, en particulier plus de deux valeurs numériques.

3. Procédé conforme à la revendication 1,
selon lequel le message graphique comprend un code (2) lisible par une machine, en particulier un code à une ou à deux dimensions.

4. Procédé conforme à la revendication 3,
comprenant en outre une étape consistant à produire le code (2) en fonction de l'événement prédéfini et/ou des paramètres de l'événement prédéterminé avec des moyens du véhicule (1).

5. Procédé conforme à l'une des revendications précédentes,
mis en oeuvre de sorte que l'information, en particulier le code (2) lisible par une machine soit contenue dans une projection lumineuse et/ou un message graphique et/ou un élément de décor, en particulier un élément de décor lumineux visible(s) par au moins un participant au trafic.

6. Procédé conforme à l'une des revendications précédentes,
selon lequel l'événement prédéterminé comprend un élément identifié avec des moyens du véhicule (1), de l'extérieur de ce véhicule (1) qui concerne d'autres participants au trafic ou des personnes situées à l'extérieur du véhicule (1).

7. Procédé conforme à l'une des revendications précédentes,
selon lequel l'information quantitative concerne une description de l'élément prédéterminé.

8. Procédé conforme à l'une des revendications précédentes, comprenant en outre des étapes consistant à :
demander l'une ou plusieurs des informations suivantes :
- l'identité du véhicule (1), la position du véhicule (1) des informations de contact de personnes, une instruction d'action, l'heure courante, l'état en particulier technique du véhicule,
- lorsqu'un accident a été déterminé en tant qu'événement, en particulier également l'information de contact d'une personne à contacter d'un occupant accidenté, une information médicale tel qu'un groupe sanguin,
produire le message graphique en fonction des informations demandées.

9. Procédé conforme à l'une des revendications précédentes,
selon lequel la représentation du message graphique comprend la projection du message graphique (2) avec des moyens du véhicule (1) sur une surface située à l'extérieur du véhicule.

10. Procédé conforme à la revendication 8,
selon lequel la position de la projection par rapport à la position du véhicule (1) varie en fonction des paramètres de déplacement du véhicule (1), en particulier de sorte que la position de la projection par rapport aux coordonnées terrestres est une vitesse et/ou une accélération plus faible(s) que le véhicule (1).

11. Procédé conforme à l'une des revendications précédentes, **caractérisé en ce que**
la représentation du message graphique (2) comprend :
la projection du message graphique (2) à partir de l'intérieur du véhicule (1) sur une surface au moins partiellement transparente du véhicule (1), en particulier sur une vitre de hayon et/ou une surface d'un feu du véhicule.

12. Procédé conforme à l'une des revendications précédentes, comprenant en outre une étape consistant à déterminer l'apparition d'une condition de conduite prédéfinie, en particulier que le véhicule (1) se déplace à une vitesse inférieure à une vitesse prédéfinie, en particulier à moins de 20 km/h, et/ou se trouve dans un type prédéfini de segments de chaussée, en particulier un croisement ou un feu rouge,
la représentation du message graphique étant effectuée en réponse à la détermination de l'apparition d'une condition de conduite prédéfinie.

13. Dispositif permettant à un véhicule (1) de communiquer avec son environnement comprenant :
au moins un dispositif permettant d'identifier un évènement prédéterminé, cet événement étant une utilisation non autorisée du véhicule ou l'instant d'un accident,
une unité de calcul permettant de définir un message graphique (2) qui renferme une information quantitative concernant l'évènement prédéfini,
un dispositif de représentation (3) qui est susceptible de représenter un message graphique (2) dans l'environnement du véhicule (1),
l'information quantitative se rapportant à l'instant et/ou au lieu de l'événement prédéfini.

14. Dispositif conforme à la revendication 13,
réalisé pour permettre la mise en oeuvre du procédé conforme à l'une des revendications 1 à 12.

15. Unité de calcul réalisée pour permettre la mise en oeuvre du procédé conforme à l'une des revendications 1 à 12.

16. Produit programme d'ordinateur comprenant un support de données comportant un code de programme et/ou un programme exécutable qui est réalisé pour permettre la mise en oeuvre du procédé conforme aux revendications 1 à 12 par une unité de calcul électronique lorsque ce code de programme ou ce programme exécutable est exécuté par cette unité de calcul.
